(19) Europäisches Patentamt
European Patent Office
Office européen des brevets

(11) Publication number: 0 238 145 B1

(12) # EUROPEAN PATENT SPECIFICATION

(45) Date of publication of the patent specification: 19.07.89

(51) Int. Cl.⁴: A01N 47/12 // (A01N47/12, 43:82)

(21) Application number: 87200484.1

(22) Date of filing: 16.03.87

(54) **Synergistic herbicidal compositions and methods of use.**

(30) Priority: 17.03.86 US 840175

(43) Date of publication of application: 23.09.87 Bulletin 87/39

(45) Publication of the grant of the patent: 19.07.89 Bulletin 89/29

(84) Designated Contracting States: AT BE CH DE ES FR GB LI NL

(56) References cited:
EP-A- 0 049 071

(73) Proprietor: STAUFFER CHEMICAL COMPANY, Westport Connecticut 06881(US)

(72) Inventor: Hindersmann, Ulli, Auf der Hage 3, D-4516 Bissendorf 2(DE)
Inventor: Ballaux, Jean-Claude, 1,Chemin de la Cressonnière, CH-1293 Bellevue/Geneve(CH)

(74) Representative: Smulders, Theodorus A.H.J., Ir. et al, Vereenigde Octrooibureaux Nieuwe Parklaan 107, NL-2587 BP 's-Gravenhage(NL)

EP 0 238 145 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism", since the combination demonstrates a potency or activity level exceeding that which it would be expected to have, based on a knowledge of the individual potencies of the components. The present invention resides in the discovery that certain thiolcarbamates and certain substituted benzamide compounds, already known individually for their herbicidal potency, display this synergism when applied in combination.

Prior Art

The two classes of compounds forming the compositions which are the subject of the present invention are independently known in the art for their effects on plant growth.

The first of the two classes, thiolcarbamates, are disclosed as herbicides in U.S. Patent Nos. 3,185,720 (Tilles et al., May 25, 1965), 3,198,786 (Tilles et al., Aug. 3, 1965), and 2,913,327 (Tilles et al., Nov. 17, 1959).

The substituted benzamide compounds forming the second class of compounds in the compositions of the present invention are presently commercially available, and are described in EP-A 49 071.

Description of the Invention

It has now been discovered that synergism in the control of undesirable vegetation is exhibited by compositions comprising a mixture of the following components:

(a) an herbicidally effective amount of a thiolcarbamate of the formula

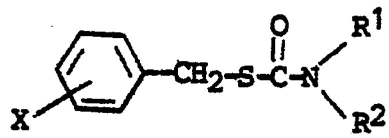

in which
X is hydrogen, chlorine or bromine; and
$R^1$ and $R^2$ are independently selected from the group consisting of $C_1$-$C_6$ alkyl and $C_5$-$C_7$ cycloalkyl, and

(b) an herbicidally effective amount of a benzamide of the formula

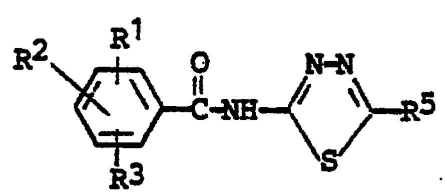

wherein
$R^1$ is hydrogen or $C_1$-$C_4$ alkoxy;
$R^2$ is $C_1$-$C_4$ alkylthio or $C_1$-$C_4$ alkoxy;
$R^3$ is $C_1$-$C_4$ alkyl, $C_1$-$C_4$ alkylthio or $C_1$-$C_4$ alkoxy;
$R^5$ is

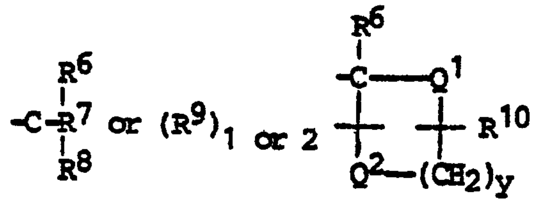

wherein
$R^6$ is $C_1$-$C_4$ alkyl, $C_2$-$C_4$ alkenyl, $C_2$-$C_4$ alkynyl, $C_1$-$C_6$ alkoxy or $C_1$-$C_6$ alkylthio;
y is an integer from 0 to 5;
$R^7$ and $R^8$ independently are $C_1$-$C_{13}$ alkyl or halo-$C_1$-$C_{13}$ alkyl;
wherein
$R^9$ and $R^{10}$ independently are hydrogen, halogen, $C_1$-$C_4$ alkyl or $C_1$-$C_4$ alkenyl;
$Q^1$ and $Q^2$ independently are $CH_2$;
and the agriculturally acceptable salts thereof, all admixed with an agriculturally acceptable carrier, diluent or adjuvant therefor.

The term "alkyl" is used herein to denote both straight-chain and branched-chain groups. Examples of alkyl groups include methyl, ethyl, n-propyl, isopropyl, n-butyl, sec-butyl, isobutyl, etc. All carbon atom ranges are inclusive of their upper and lower limits.

Examples of thiolcarbamates useful in the compositions and method of the present invention are:

1. S-benzyl dipropylthiolcarbamate
2. S-benzyl ethyl, 1,2-dimethylpropylthiolcarbamate
3. S-(2-chlorobenzyl)-N,N-diethylthiolcarbamate
4. S-(4-chlorobenzyl)-N,N-diethylthiolcarbamate

These and other thiolcarbamates within the scope of this invention can be prepared by the procedures described in U.S. Patent Nos. 2,913,327, 3,185,720, and 3,198,786 mentioned above, and U.S. Patents 3,144,475, 2,992,091 and 3,207,775.

The preferred thiolcarbamate for use in the invention is S-benzyl dipropyl thiolcarbamate.

The preferred benzamide for use in the compositions and method of the invention is n-[3-(1-ethyl-1-methylpropyl)-5-isoxazolyl]-2,6-dimethylbenzamide, sold under the tradename EL-107, by the Elanco Company, USA.

Other benzamide compounds, their salts and derivatives, which can also be used are those which are set forth below:
N-[3-(1-ethyl-1-methylpropyl)-5-isoxazolyl]-2,6-dimethoxybenzamide;
N-[3-(tert-butyl)-5-isoxazolyl]-2,6-dimethoxybenzamide;
N-[5-(1-ethyl-1-methylpropyl)-1,3,4-thiadiazol-1-yl]-2,6-dimethoxybenzamide;
N-[5-(1,1-diethylpropyl)-1,3,4-thiadiazol-2-yl]-2,6-dimethoxybenzamide;
N-[3-(1,1-dimethylpropyl)-5-isoxazolyl]-2,6-dimethoxybenzamide;
N-[3-(1,1-diethylhexyl)-5-isoxazolyl]-2,6-dimethoxybenzamide;
N-[5-(1-ethylheptyl)-1,3,4-thiadiazol-2-yl]-2,6-dimethoxybenzamide;
N-[3-(1,1-diethylheptyl)-5-isoxazolyl]-2,6-dimethoxybenazmide;
N-[3-(1-ethyl-1-methylbutyl)-5-isoxazolyl]-2,6-dimethoxybenzamide;
N-[3-(2,2-diethylbutyl)-5-isoxazolyl]-2,6-dimethoxybenzamide;
N-[5-(1-methylbutyl)-1,3,4-thiadiazol-2-yl]-2,6-dimethoxybenzamide;
N-[5-(1-ethyl-1-methylhexyl)-1,3,4-thiadiazol-2-yl]-2,6-dimethoxybenzamide;
N-[3-(1,1-dimethyltetradecyl)-5-isoxazolyl]-2,6-dimethoxybenzamide;
N-[5-(1,2-dimethylbutyl)-1,3,4-thiadiazol-2-yl]-2,6-dimethoxybenzamide;
N-[5-(1,2-diethylhexyl)-3-isoxazolyl]-2,6-dimethoxybenzamide;
N-[5-(1,1,2-trimethylbutyl)-1,3,4-thiadiazol-2-yl]-2,6-dimethoxybenzamide;
N-[3-(1,1,2,2-tetramethylbutyl)-5-isoxazolyl]-2,6-dimethoxybenzamide;
N-[3-(1-ethylhexyl)-5-isoxazolyl]-2,6-dimethoxybenzamide;
N-[5-(1-ethyl-1-methylpentyl)-3-isoxazolyl]-2,6-dimethoxybenzamide;
N-[5-(1,1-diethyldecyl)-1,3,4-thiadiazol-2-yl]-2,6-dimethoxybenzamide;
N-[5-(1-isopropylcyclohexyl)-3-isoxazolyl]-2,6-dimethoxybenzamide;
N-[5-(1-methylcyclopropyl)-1,3,4-thiadiazol-2-yl]-2,6-dimethoxybenzamide;
N-[5-(1-ethylcycloheptyl)-1,3,4-thiadiaol-2-yl]-2,6-dimethoxybenzamide;
and N-[3-(1-isopropylcyclopentyl)-5-isoxazolyl]-2,6-dimethoxybenzamide.

The terms "synergism" and "synergistic" are used herein to convey the result observed when a combination of herbicides demonstrates a potency in excess of that which the combination would be expected to produce on the basis of the potencies of each herbicide applied individually.

In the compositions of this invention, the thiolcarbamate:benzamide weight ratio at which the herbicidal response is synergistic lies within the range of about 75:1 to about 20:1. The synergism is especially observed when the compositions are used against broadleaf weeds growing among barley and winter wheat.

Application rates will depend upon the weeds to be controlled and the degree of control desired. In general, the compositions of this invention are most efficiently employed at a rate of 0.01 to 50 pounds per acre (0.01 to 56 kilograms per hectare) of the active ingredients, preferably 0.1 to 25 pounds per acre (0.11 to 28 kilograms per hectare).

The compositions are particularly effective in pre-emergence control of Galium aparine and Matricaria.

The method of this invention, therefore, comprises applying a herbicidally effective amount of the synergistic compositions of the invention to the locus where control is described.

The synergistic herbicidal activity of the compositions is illustrated in Example I below.

EXAMPLE I

The herbicidal responses from a combined use of S-benzyl dipropylthiolcarbamate (Compound 1) and N-[3-(1-ethyl-1-methylpropyl)-5-isoxazolyl]-2,6-dimethylbenzamide, EL-107 (Compound 2) were studied by means of a field test.

A series of field test plots were prepared and planted with winter wheat and winter barley. The test herbicidal compositions were then applied to the soil in pre-emergence of the crops and weeds at the rate indicated by diluting commercial formulations of the respective herbicides with water and applying at the predetermined rate. The following weed pest species were seeded along side the wheat and barley.

| | | |
|---|---|---|
| Avena spp. | wild oats | (AVESS) |
| Galium aparine | bedstraw | (GALAP) |
| Viola arvenis | field pansy | (VIOAR) |
| Alopecurus myosuroides | black grass | (ALOMY) |
| Veronica hederifolia | ivy leaved speedwell | (VERHE) |

In addition to the foregoing, the following naturally occurring weed specie, which also grew up along side the wheat and barley crop plants, was treated with the herbicidal compositions of this invention.

| | | |
|---|---|---|
| Matricaria spp. | mayweed | (MATSS) |

Water was used to dilute all the herbicide compositions. The chemical solutions were delivered to the soil by pre-emergence application with a tank sprayer. Ratings were made 106 days after treatment.

At that time, the control and test plots were compared to the standards and each plot was rated visually in terms of percent control ranging from 0% to 100%, with 0% representing the same degree of growth as the same plot in the standard and 100% representing complete kill of all weeds in the plot. All types of plant injury were taken into consideration.

For the weed species, the results of these tests are listed in Table 1 in the columns headed by the symbol "O" (indicating the "observed" results), each figure representing the average of two replications of the same test. These results are compared with the results, shown in the columns headed by the symbol "E", derived from the control data using Limpel's formula (Limpel et al., 1962, "Weed Control by Dimethylchloroterephthalate Alone and in Certain Combinations," Procee. NEWCC., Vol. 16, pp. 48-53):

$$E = X + Y - \frac{XY}{100}$$

where X = observed percent injury when one of the herbicides is used alone, and
y = observed percent injury when the other herbicide is used alone.

It is clear from the table that synergism was observed at many of the application rates tested.

Table I

Data Summary Showing Synergism Between Compound A and EL-107 (Flexidor)

| Compound | Rate kg a.i./ha | Weeds AVESS | | ALOMY | | GALAP | | MATSS | | VIOAR | | VERHE | |
|---|---|---|---|---|---|---|---|---|---|---|---|---|---|
| | | O | E | O | E | O | E | O | E | O | E | O | E |
| A | 2 | 11 | | 96 | | 29 | | 47 | | 0 | | 14 | |
| | 3 | 39 | | 91 | | 35 | | 32 | | 6 | | 29 | |
| | 4 | 33 | | 96 | | 50 | | 0 | | 20 | | 16 | |
| EL 107 | 0.0625 | 0 | | 42 | | 9 | | 99 | | 100 | | 99 | |
| | 0.125 | 0 | | 33 | | 41 | | 99 | | 100 | | 100 | |
| A+ | 2 + 0.0625 | 0 | 11 | 39 | 98 | 75 | 35 | 99 | 94 | 100 | 100 | 100 | 99 |
| EL 107 | 2 + 0.125 | 50 | 11 | 93 | 97 | 89 | 98 | 100 | 99 | 100 | 100 | 100 | 100 |
| A+ | 3 + 0.0625 | 17 | 39 | 91 | 95 | 75 | 40 | 96 | 94 | 100 | 100 | 100 | 99 |
| EL 107 | 3 + 0.125 | 39 | 39 | 97 | 94 | 88 | 62 | 100 | 99 | 100 | 100 | 100 | 100 |
| A+ | 4 + 0.0625 | 50 | 33 | 91 | 98 | 85 | 54 | 100 | 88 | 100 | 100 | 100 | 99 |
| EL 107 | 4 + 0.125 | 44 | 33 | 95 | 97 | 90 | 70 | 100 | 99 | 100 | 100 | 100 | 100 |

E = Expected data
O = Acutal observed data
AVESS = Avena species
ALOMY = Alopecurus myosuroides
GALAP = Galium aparine
MATSS = Matricaria
VIOAR = Viola arvensis
VERHE = Veronic hederifolia
Compound A = S-benzyl dipropyl thiocarbamate
EL 107 = N-[3-(1-ethyl-1-methylpropyl)-5-isoxazolyl]-2,6-dimethylbenzamide

The compositions of the present invention show synergistic activity as herbicides in controlling the growth of undesirable vegetation when applied to such vegetation in pre-emergence application. By "preemergence" is meant application to the soil surface application prior to the time of emergence of the target weed therefrom. The compositions are generally embodied in formulations which contain inert or occasionally active ingredients or diluent carriers in addition to the active compounds. Examples of such ingredients or carriers are water, organic solvents, surface active agents, oil, water-inoil emulsions, wetting agents, dispersing agents, and emulsifying agents. The herbicidal formulations generally take the form of wettable powders, dry flowables, solutions or emulsifiable concentrates.

Wettable powders and dry flowables are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compositions can also be applied to the soil and foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are suspension concentrates (flowables), which consist of suspensions of solid particles in a (continuous) liquid medium, which can be aqueous or non-aqueous. Typical coformulants will be wetting agents, dispersants, suspending agents, viscosity building agents, anti-cooling agents, ant9-freezing and anti-foaming agents.

The formulations described above can be applied to the locus where control is sought in any conventional manner before the vegetation has emerged from the soil. Application can be achieved by any conventional technique such as the use of ground spraying equipment or aircraft-mounted sprayers. Various other application techniques will be apparent to one skilled in the pesticide art.

## Claims

1. A synergistic herbicidal composition comprising a mixture of
(a) an herbicidally effective amount of a thiolcarbamate of the formula

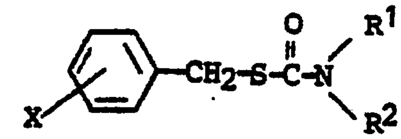

in which
X is hydrogen, chlorine or bromine; and
$R^1$ and $R^2$ are independently selected from the group consisting of $C_1$-$C_6$ alkyl and $C_5$-$C_7$ cycloalkyl, and
(b) an herbicidally effective amount of a benzamide of the formula

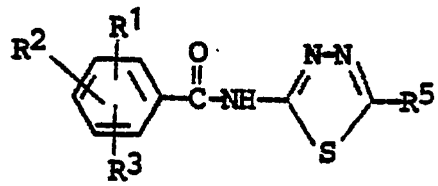,

wherein
$R^1$ is hydrogen or $C_1$-$C_4$ alkoxy;
$R^2$ is $C_1$-$C_4$ alkylthio or $C_1$-$C_4$ alkoxy;
$R^3$ is $C_1$-$C_4$ alkyl, $C_1$-$C_4$ alkylthio or $C_1$-$C_4$ alkoxy;
$R^5$ is

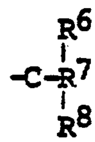 or $(R^9)_{1 \text{ or } 2}$ 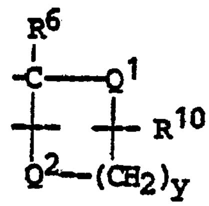

wherein
$R^6$ is $C_1$-$C_4$ alkyl, $C_2$-$C_4$ alkenyl, $C_2$-$C_4$ alkynyl, $C_1$-$C_6$ alkoxy or $C_1$-$C_6$ alkylthio;
y is an integer from 0 to 5;
$R^7$ and $R^8$ independently are $C_1$-$C_{13}$ alkyl or halo-$C_1$-$C_{13}$ alkyl; wherein
$R^9$ and $R^{10}$ independently are hydrogen, halogen, $C_1$-$C_4$ alkyl or $C_1$-$C_4$ alkenyl;
$Q^1$ and $Q^2$ independently are $CH_2$;
and the agriculturally acceptable salts thereof, all admixed with an agriculturally acceptable carrier, diluent, or adjuvant therefor.

2. The composition of Claim 1 wherein (a) is S-benzyl dipropyl thiolcarbamate and (b) is N-[3-(1-ethyl-1-methylpropyl)-5-isoxazolyl]-2,6-dimethoxybenzamide.

3. The composition of Claim 1 wherein (a) is S-benzyl ethyl, 1,2-dimethylpropyl thiolcarbamate and (b) N-[3-(1-ethyl-1-methylpropyl)-5-isoxazolyl]-2,6-dimethoxybenzamide.

4. The composition of Claim 1 wherein (a) is S-(2-chlorobenzyl)-N,N-diethyl thiolcarbamate and (b) N-[3-(1-ethyl-1-methylpropyl)-5-isoxazolyl]-2,6-dimethoxybenzamide.

5. A method of controlling undesirable vegetation which comprises the pre-emergence application to said vegetation of a herbicidal composition comprising a mixture of
(a) an herbicidally effective amount of a thiolcarbamate of the formula

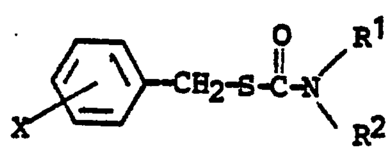

in which
X is hydrogen, chlorine or bromine; and

$R^1$ and $R^2$ are independently selected from the group consistiof $C_1$-$C_8$ alkyl and $C_5$-$C_7$ cycloalkyl, and
(b) an herbicidally effective amount of a benzamide of the formula

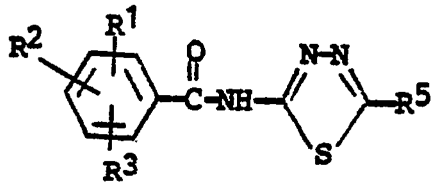

wherein
$R^1$ is hydrogen or $C_1$-$C_4$ alkoxy;
$R^2$ is $C_1$-$C_4$ alkylthio or $C_1$-$C_4$ alkoxy;
$R^3$ is $C_1$-$C_4$ alkyl, $C_1$-$C_4$ alkylthio or $C_1$-$C_4$ alkoxy;
$R^5$ is

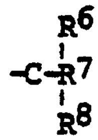 or 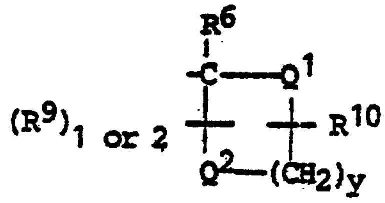

wherein
$R^6$ is $C_1$-$C_4$ alkyl, $C_2$-$C_4$ alkenyl, $C_2$-$C_4$ alkynyl, $C_1$-$C_6$ alkoxy or $C_1$-$C_6$ alkylthio;
y is an integer from 0 to 5;
$R^7$ and $R^8$ independently are $C_1$-$C_{13}$ alkyl or halo-$C_1$-$C_{13}$ alkyl; wherein
$R^9$ and $R^{10}$ independently are hydrogen, halogen, $C_1$-$C_4$ alkyl or $C_1$-$C_4$ alkenyl;
$Q^1$ and $Q^2$ independently are $CH_2$;
and the agriculturally acceptable salts thereof, all admixed with an agriculturally acceptable carrier, diluent, or adjuvant therefor.

6. The method of Claim 5 wherein (a) is S-benzyl dipropyl thiolcarbamate and (b) is N-[3-(1-ethyl-1-methylpropyl)-5-isoxazolyl]-2,6-dimethoxybenzamide.

7. The method of Claim 5 wherein (a) is S-benzyl ethyl, 1,2-dimethylpropyl thiolcarbamate and (b) is N-[3-(1-ethyl-1-methylpropyl)-5-isoxazolyl]-2,6-dimethoxybenzamide.

8. The method of Claim 5 wherein (a) is S-(2-chlorobenzyl)-N,N-diethyl thiolcarbamate and (b) is N-[3-(1-ethyl-1-methylpropyl)-5-isoxazolyl]-2,6-dimethoxybenzamide.

**Patentansprüche**

1. Synergistische herbizide Zubereitung, dadurch gekennzeichnet, daß sie ein Gemisch enthält aus
(a) einer herbizid wirksamen Menge eines Thiolcarbamats der Formel

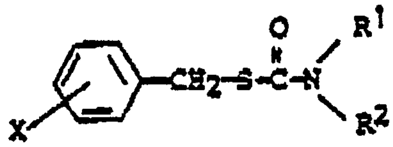

worin
X Wasserstoff, Chlor oder Brom bedeutet und $R^1$ und $R^2$ unabhängig ausgewählt werden aus der Gruppe $C_1$–$C_6$-Alkyl und $C_5$–$C_7$-Cycloalkyl, und
(b) eine herbizid wirksame Menge eines Benzamids der Formel

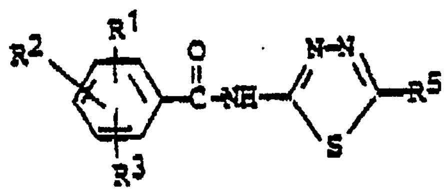

worin
$R^1$ Wasserstoff oder $C_1$–$C_4$-Alkoxy bedeutet,
$R^2$ $C_1$–$C_4$-Alkylthio oder $C_1$–$C_4$-Alkoxy bedeutet,
$R^3$ $C_1$–$C_4$-Alkyl, $C_1$–$C_4$-Alkylthio oder $C_1$–$C_4$-Alkoxy bedeutet,
$R^5$

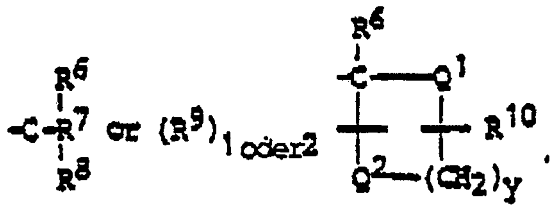

bedeutet, worin
$R^6$ für $C_1$–$C_4$-Alkyl, $C_2$–$C_4$-Alkenyl, $C_2$–$C_4$-Alkinyl, $C_1$–$C_6$-Alkoxy oder $C_1$–$C_6$-Alkylthio steht,
y für eine ganze Zahl von 0 bis 5 steht,
$R^7$ und $R^8$ unabhängig für $C_1$–$C_{13}$-Alkyl oder Halo-$C_1$–$C_{13}$-alkyl stehen,
worin
$R^9$ und $R^{10}$ unabhängig für Wasserstoff, Halogen, $C_1$–$C_4$-Alkyl oder $C_1$–$C_4$-Alkenyl stehen,
$Q^1$ und $Q^2$ unabhängig für $CH_2$ stehen,
und ihre landwirtschaftlich annehmbaren Salze, alle vermischt mit einem landwirtschaftlich annehmbaren Träger, Verdünnungsmittel oder Adjuvans dafür.

2. Zubereitung nach Anspruch 1, dadurch gekennzeichnet, daß (a) S-Benzyldipropylthiolcarbamat und (b) N-[3-(1-Ethyl-1-methylpropyl)-5-isoxazolyl]-2,6-dimethoxybenzamid ist.

3. Zubereitung nach Anspruch 1, dadurch gekennzeichnet, daß (a) S-Benzylethyl-1,2-dimethylpropylthiolcarbamat und (b) N-[3-(1-Ethyl-1-methylpropyl)-5-isoxazolyl]-2,6-dimethoxybenzamid ist.

4. Zubereitung nach Anspruch 1, dadurch gekennzeichnet, daß (a) S-(2-Chlorbenzyl)-N,N-diethylthiolcarbamat und (b) N-[3-(1-Ethyl-1-methylpropyl)-5-isoxyzolyl]-2,6-dimethoxybenzamid ist.

5. Verfahren zur Kontrolle unerwünschter Vegetation, dadurch gekennzeichnet, daß man als Präemergenzanwendung auf die Vegetation eine herbizide Zubereitung anwendet, die ein Gemisch enthält aus

(a) einer herbizid wirksamen Menge eines Thiolcarbamats der Formel

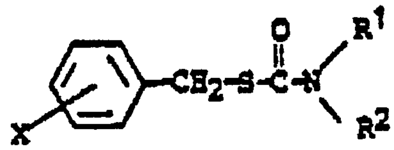

worin
X Wasserstoff, Chlor oder Brom bedeutet und
$R^1$ und $R^2$ unabhängig voneinander aus der Gruppe bestehend aus $C_1$–$C_6$-Alkyl und $C_5$–$C_7$-Cycloalkyl ausgewählt werden, und
(b) eine herbizid wirksame Menge eines Benzamids der Formel

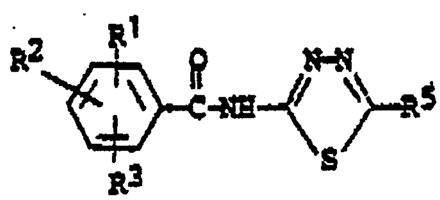

worin
$R^1$ Wasserstoff oder $C_1$–$C_4$-Alkoxy bedeutet,
$R^2$ $C_1$–$C_4$-Alkylthio oder $C_1$–$C_4$-Alkoxy bedeutet,
$R^3$ $C_1$–$C_4$-Alkyl, $C_1$–$C_4$-Alkylthio oder $C_1$–$C^4$-Alkoxy bedeutet,
$R^5$

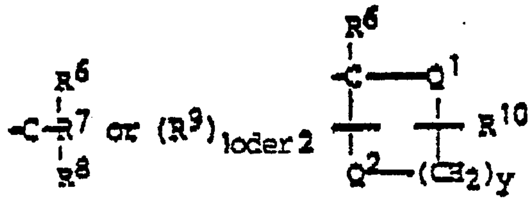

bedeutet, worin
$R^6$ für $C_1$–$C_4$-Alkyl, $C_2$–$C_4$-Alkenyl, $C_2$–$C_4$-Alkinyl, $C_1$–$C_6$-Alkoxy oder $C_1$–$C_6$-Alkylthio steht, y eine ganze Zahl von 0 bis 5 bedeutet,
$R^7$ und $R^8$ unabhängig für $C_1$–$C_{13}$-Alkyl oder Halo-$C_1$–$C_{13}$-alkyl stehen,
worin
$R^9$ und $R^{10}$ unabhängig für Wasserstoff, Halogen, $C_1$–$C_4$-Alkyl oder $C_1$–$C_4$-Alkenyl stehen,
$Q^1$ und $Q^2$ unabhängig für $CH_2$ stehen,
und ihre landwirtschaftlich annehmbaren Salze, alle vermischt mit einem landwirtschaftlich annehmbaren Träger, Verdünnungsmittel oder Adjuvans dafür.

6. Verfahren nach Anspruch 5, dadurch gekennzeichnet, daß (a) S-Benzyldipropylthiolcarbamat und (b) N-[3-(1-Ethyl-1-methylpropyl)-5-isoxazolyl]-2,6-dimethoxybenzamid ist.

7. Verfahren nach Anspruch 5, dadurch gekennzeichnet, daß (a) S-Benzylethyl-1,2-dimethylpropylthiolcarbamat und (b) N-[3-(1-Ethyl-1-methylpropyl)-5-isoxazolyl]-2,6-dimethoxybenzamid ist.

8. Verfahren nach Anspruch 5, dadurch gekennzeichnet, daß (a) S-(2-Chlorbenzyl)-N,N-diethylthiolcarbamat und (b) N-[3-(1-Ethyl-1-methylpropyl)-5-isoxazolyl]-2,6-dimethoxybenzamid ist.

## Revendications

1. Une composition herbicide synergétique comprenant un mélange de:
a) une quantité herbicidement efficace d'un thiolcarbamate de formule:

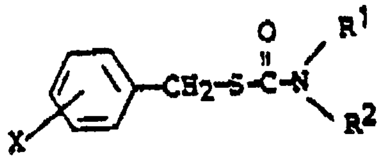

dans laquelle
X est l'hydrogène, le chlore ou le brome;
$R^1$ et $R^2$ sont choisis indépendamment dans le groupe consistant dans les alkyles $C_1$–$C_6$ et les cycloalkyles $C_5$–$C_7$, et
b) une quantité herbicidement efficace d'un benzamide de formule

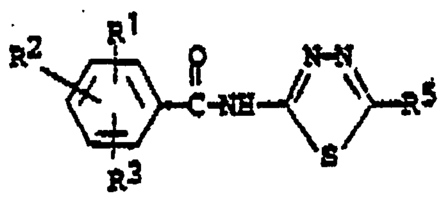

dans laquelle
$R^1$ est l'hydrogène ou un alkoxy $C_1$–$C_4$;
$R^2$ est un alkylthio $C_1$–$C_4$ ou un alkoxy $C_1$–$C_4$
$R^3$ est un alkyle $C_1$–$C_4$, un alkylthio $C_1$–$C_4$ ou un alkoxy $C_1$–$C_4$
$R^5$ est

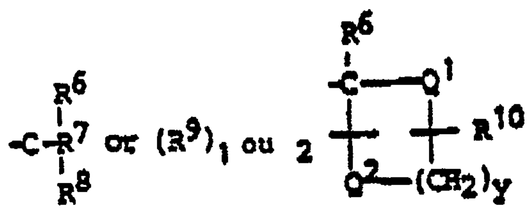

dans laquelle

$R^6$ est un alkyle $C_1$–$C_4$, un alkényle $C_2$–$C_4$, un alkynyl $C_2$–$C_4$, un alkoxy $C_1$–$C_6$ ou un alkylthio $C_1$–$C_6$;
y est un nombre entier de 0 à 5;
$R^7$ et $R^8$ sont indépendamment des alkyles $C_1$–$C_{13}$ ou des haloalkyles $C_1$–$C_{13}$;
dans laquelle
$R^9$ et $R^{10}$ sont indépendamment des hydrogènes, des halogènes, des alkyles $C_1$–$C_4$ ou des alkényles $C_1$–$C_4$;
$Q^1$ et $Q^2$ dont indépendamment des radicaux $CH_2$;
et leurs sels agriculturellement acceptables, tous mélangés avec un adjuvant, un diluant ou un support agriculturellement acceptable.

2. La composition de la revendication 1 dans laquelle (a) est le thiolcarbamate de S-benzyl dipropyle et (b) est le N-[3-(1-éthyl-1-méthylpropyl)-5-isoxazolyl]-2,6-diméthoxybenzamide.

3. La composition de la revendication 1 dans laquelle (a) est le thiolcarbamate de S-benzyl éthyl 1,2-diméthylpropyle et (b) est le N-[3-(1-éthyl-1-méthylpropyl)-5-isoxazolyl]-2,6-diméthoxybenzamide.

4. La composition selon la revendication 1 dans laquelle (a) est le thiolcarbamate de S-(2-chlorobenzyl)-N,N-diéthyl et (b) est le N-[3-(1-éthyl-1-méthylpropyl)-5-isoxazolyl]-2,6-diméthoxybenzamide.

5. Une méthode de maitrise de la végétation indésirable qui comprend l'application pré-émergence à ladite végétation d'une composition herbicide comprenant un mélange de
a) une quantité herbicidement efficace d'un thiolcarbamate de formule:

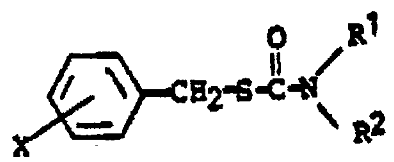

dans laquelle
X est l'hydrogène, le chlore ou le brome;
$R^1$ et $R^2$ sont choisis indépendamment dans le groupe consistant dans les alkyles $C_1$–$C_6$ et les cycloalkyles $C_5$–$C_7$, et
b) une quantité herbicidement efficace d'un benzamide de formule

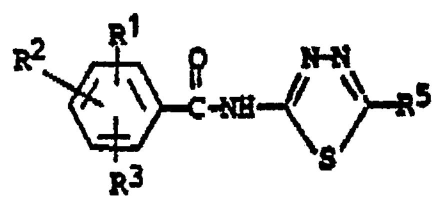

dans laquelle
$R^1$ est l'hydrogène ou un alkoxy $C_1$–$C_4$;
$R^2$ est un alkylthio $C_1$–$C_4$ ou un alkoxy $C_1$–$C_4$
$R^3$ est un alkyle $C_1$–$C_4$, un alkylthio $C_1$–$C_4$ ou un alkoxy $C_1$–$C_4$
$R^5$ est

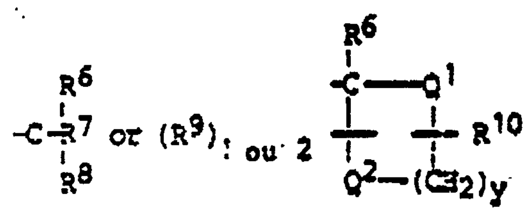

dans laquelle
$R^6$ est un alkyle $C_1$–$C_4$, un alkényle $C_2$–$C_4$, un alkynyl $C_2$–$C_4$, un alkoxy $C_1$–$C_6$ ou un alkylthio $C_1$–$C_6$;
y est un nombre entier de 0 à 5;
$R^7$ et $R^8$ sont indépendamment des alkyles $C_1$–$C_{13}$ ou des haloalkyles $C_1$–$C_{13}$;
dans laquelle
$R^9$ et $R^{10}$ sont indépendamment des hydrogènes, des halogènes, des alkyles $C_1$–$C_4$ ou des alkényles $C_1$–$C_4$;
$Q^1$ et $Q^2$ dont indépendamment des radicaux $CH_2$;
et leurs sels agriculturellement acceptables, tous mélangés avec un adjuvant, un diluant ou un support agriculturellement acceptable.

6. Le procédé de la revendication 5 dans lequel (a) est le thiolcarbamate de S-benzyl dipropyle et (b) est le N-[3-(1-éthyl-1-méthylpropyl)-5-isoxazolyl]-2,6-diméthoxybenzamide.

7. Le procédé de la revendication 5 dans lequel (a) est le thiolcarbamate de S-benzyl éthyl 1,2-diméthylpropyle et (b) est le N-[3-(1-éthyl-1-méthylpropyl)-5-isoxazolyl]-2,6-diméthoxybenzamide.

8. Le procédé de la revendication 5 dans lequel (a) est le thiolcarbamate de S-(2-chlorobenzyl)-N,N-diéthyl et (b) est N-[3-(1-éthyl-1-méthylpropyl)-5-isoxazolyl]-2,6-diméthoxybenzamide.